# EUROPEAN PATENT APPLICATION

(11) **EP 4 460 034 A1**
(43) Date of publication of application: **06.11.2024**
(21) Application number: 24172618.1
(22) Date of filing: 26.04.2024
(51) Int. Cl.: H04Q 11/00, G02B 6/35

(54) **EXTENDABLE OPTICAL CIRCUIT SWITCH ARCHITECTURE**

(30) Priority: 04.05.2023 US 202318143566
(71) Applicant: Nokia Solutions and Networks Oy, 02610 Espoo (FI)
(72) Inventor: SZCZERBAN, Mijail, Murray Hill, 07974-0636 (US); RYF, Roland, Aberdeen, 07747 (US); SIMSARIAN, John E, Highland Park, 08904 (US)
(74) Representative: Novagraaf Technologies

(57) **Abstract**

A method and apparatus for optical cross-connection are provided for reflectively coupling at least a first intermodular optical signal from at least one input optical fiber port of a source OCS module to an output optical port of a destination OCS module. The coupling involves steering the intermodular optical signal to an intermediate optical reflector of the source OCS module, using the intermediate optical reflector to steer the optical signal out of the source OCS module to the destination OCS module, and within the destination OCS module, steering the optical signal onto an output optical fiber port.

## Description

### Technical Field

The disclosure relates to optical circuit switches.

### Background

In an optical fiber network, data encoded in modulated pulses of light is transported between nodes on fiber-optic cables. Because the capacity of this technology for carrying information is extremely high, it has become critical for telecommunication networks of various kinds and at various scales. One important feature in the operation of an optical fiber network is the fast switching of connections between nodes. All-optical switching is one of several possible approaches to network switching. Advantages of all-optical switching include high bandwidth and transparency to network protocols. All-optical switches can also be non-blocking.

An optical cross-connect (OXC) is a device that can implement all-optical switching between different optical fibers of an optical network. The OXC may include optical interfaces for individual optical fiber or for pairs of optical fiber(s), which carry incoming or outgoing optical signals. Within the OXC each connection is effectuated by controllably establishing an optical path between an optical fiber for input and an optical fiber for output. These optical paths are reconfigurable at high speed through the use of, for example, MEMS mirrors or LCOS arrays under suitable digital control.

Recent growth in the scale of core optical networks, among others, has begun to challenge the capacity of existing infrastructure. As a consequence, there has been interest in increasing the port counts of switching devices such as OXCs, as network requirements increase.

### Summary

Various embodiments provide non-blocking, scalable OXC switch architectures that allow the port count to be extended by adding optical circuit switch (OCS) modules to an OXC node. Each OCS module can independently operate to establish connections between its own inputs and outputs. The modularity of these embodiments offers the further advantage of creating independent failure regions, so that single point of failure can often be avoided.

In various implementations, the OCS modules include modular sub-matrix switch cards. The port count of an OXC switch node to which the OCS modules belong can be extended by adding OCS modules to the OXC node. The additional OCS modules can be added to the OXC without affecting existing light paths. Intermediate optical reflectors situated within the OCS modules may be used to direct incoming light to an intended module's input or output steering matrix. The intermediate optical reflectors may be active or passive. In embodiments, an optical reflector may be, e.g., a mirror.

Each OCS module has an array of input optical fiber ports and an array of output optical fiber ports. Each OCS module may include imaging optics, input and output steering matrices or an input/output steering matrix, and an intermediate optical reflector section that interfaces the input and output matrices.

The intermediate optical reflectors can route an input light beam to a destination OCS module that is different from the OCS module where the beam originally entered. In some cases, the input light beam could be routed directly to an output optical fiber port of the destination module. In other cases, the beam could be routed to subcomponents within the destination OCS module that act on the beam before it reaches an output optical fiber port. For example, the beam could be routed first to an output steering matrix of the destination OCS module, which, in turn, routes the beam to the output optical fiber port of the destination OCS module. Another example of a subcomponent of the destination OCS module that could usefully act on the beam before it reaches an output optical fiber port is an optic element or mirror set that reduces the angle of incidence of the beam on the output steering matrix.

Accordingly, the present disclosure relates, in a first aspect, to apparatus that comprises
an electronic device having on it a plurality of module connectors and a plurality of optical circuit switch (OCS) modules that are removably mechanically affixed to the electronic device by the module connectors. The OCS modules each have a plurality of input optical fiber ports and a plurality of output optical fiber ports.

Each one of the OCS modules has a reconfigurable arrangement of optical reflectors capable of selectively optically cross-connecting ones of the input optical fiber ports of the same one of the OCS modules to ones of the output optical fiber ports of the same one of the OCS modules. Further, each particular one of the OCS modules is selectively configurable to route light received from ones of its optical input optical fiber ports, via its arrangement of optical reflectors, to one or more others of the OCS modules.

In embodiments, the routing of light from particular ones to others of the OCS modules is via one more free-space optical paths connecting the particular ones to the one or more others of the OCS modules.

In embodiments, at least one of the OCS modules is configurable to route light from ones of its own input optical fiber ports to a second one of the OCS modules via a free-space optical path traversing an intervening third one of the OCS modules.

In embodiments, the electronic device comprises an electronic controller communicatively connected to operate the reconfigurable arrangements of optical reflectors of the OCS modules.

In embodiments, the reconfigurable arrangement of optical reflectors within each of the OCS modules comprises an input optical reflector arranged to receive light from the input optical fiber ports, an output optical reflector arranged to transmit light to the output optical fiber ports, and an intermediate optical reflector array comprising an intermediate reflector that can reflectively couple the input optical reflector to the output optical refl ector.

In embodiments, the input optical reflector is configurable to selectively direct light, via the intermediate optical reflector array, to one or more others of the OCS modules. In some embodiments, the intermediate optical reflector array comprises a configurable reflector that can be configured to act jointly with the input optical reflector for selectively directing light to one or more others of the OCS modules.

In embodiments, the electronic device comprises an electronic controller communicatively connected to operate the reconfigurable arrangements of optical reflectors of the OCS modules.

In embodiments, the reconfigurable arrangement of optical reflectors within each specific one of the OCS modules is configurable to direct light received from a different one of the OCS modules to one or more of the output optical fiber ports of the specific one of the OCS modules.

In embodiments, the input optical reflector and the output optical reflector are MEMS mirror arrays.

In embodiments, the intermediate optical reflector array comprises an intramodular intermediate reflector that can reflectively couple the input optical reflector of the particular one of the OCS modules to the output optical reflector of the particular one of the OCS modules, and
the intermediate optical reflector array further comprises at least one intermodular intermediate reflector that can reflectively couple the input optical reflector of the particular one of the OCS modules to a different one or different ones of the OCS modules. In some embodiments, each of the intermodular intermediate reflectors is a static mirror. In other embodiments, each of the intermodular intermediate reflectors is a reconfigurable mirror.

In a second aspect, the present disclosure relates to a method that comprises causing an optical signal from a first input optical fiber port of a first optical circuit switch (OCS) module to be received by a second OCS module by reconfiguring at least one optical reflector of the first OCS module to reflect the optical signal onto an optical path terminating at the second OCS module.

The method further comprises causing the received optical signal to be output by the second OCS module by reconfiguring an optical reflector of the second OCS module to direct the received optical signal to an output optical fiber port of the second OCS module, thereby to make an intermodular connection.

The method further comprises causing an optical signal from a second input optical fiber port of the first OCS module to be output by said first OCS module by reconfiguring at least one optical reflector of the first OCS module to direct the optical signal from said second input optical fiber port to an output optical fiber port of the first OCS module, thereby to make an intramodular connection.

In embodiments, the optical path terminating at the second OCS module is a free-space optical path.

In embodiments, the making of the intramodular connection comprises reconfiguring an input optical reflector and reconfiguring an output optical reflector of the first OCS module, the making of the intermodular connection comprises reconfiguring an input optical reflector of the first OCS module and reconfiguring an output optical reflector of the second OCS module, and
within each said OCS module, the respective input and output optical reflectors are reflectively coupled via an intermediate optical reflector. In embodiments, the making of the intermodular connection further comprises reconfiguring the intermediate optical reflector of the first OCS module.

In embodiments, the intramodular connection and the intermodular connection are made concurrently with a plurality of other intramodular and intermodular connections. The making of the plural, concurrent connections in such embodiments comprises selecting an input OCS module and an output OCS module for implementing each connection from a set of desired connections, the selection being made from a plurality of OCS modules that includes said first and second OCS modules.

The making of the plural, concurrent connections further comprises
selecting a respective input optical fiber port and a respective output optical fiber port of the selected OCS modules for implementing each desired connection, obtaining a set of optical reflector configurations for implementing each desired connection, and reconfiguring at least some of the input and output optical reflectors of the selected input and output OCS modules according to the obtained configurations to make the desired connections.

In embodiments, the making of the plural concurrent connections further comprises reconfiguring at least some of the intermediate optical reflectors of the selected input and output OCS modules according to the obtained configurations.

### Brief Description of the Drawings

FIGS. 1 and 2 are schematic diagrams of known optical arrangements.
FIG. 3 is a schematic diagram of an optical arrangement within an OCS module that would be useful for practicing principles described here.
FIG. 4 is a schematic, perspective view of a single OCS module of a kind that could be useful in implementing principles described here.
FIG. 5 is a schematic, cross-sectional view of an OCS module similar to the OCS module of FIG. 4.
FIG. 6 provides a schematic, cross-sectional view of an ensemble of three OCS modules mounted in a rack and interconnected by intermodular optical propagation paths according to principles described here.
FIG. 7 is a schematic, perspective view of an ensemble of three OCS modules, similar to the OCS module ensemble of FIG. 6.
FIG. 8 is a notional block diagram illustrating functional elements of an optical switching system with OCS modules.
FIG. 9 is a flowchart illustrating the steps in an example procedure for operating an apparatus of the kind described here.
FIG. 10 is a schematic drawing of an electronic device for optical switching, in which a plurality of switch modules are removably mechanically fixed to the electronic device by a plurality of module connectors, which are shown symbolically in the figure.

### Detailed Description

An example of beam steering using MEMS mirrors is provided in R. Ryf et al., "1296-port MEMS transparent optical crossconnect with 2.07 petabit/s switch capacity, "OFC 2001 Optical Fiber Communication Conference and Exhibit Technical Digest Postconference Edition, Anaheim, CA, USA (2001) pages PD28-PD28, hereinafter cited as "RYF 2001" and hereby incorporated herein in entirety by reference.

MEMS-based optical switching is also discussed in the following publications, each of which is hereby incorporated herein by reference in entirety: J. Leuthold et al., "All-optical nonblocking terabit/s crossconnect based on low power all-optical wavelength converter and MEMS switch fabric," OFC 2001 Optical Fiber Communication Conference and Exhibit Technical Digest Postconference Edition (IEEE Cat. 01CH37171), Anaheim, CA, USA ( 2001) pages PD16-PD16, and R. Urata, R. et al., "Mission Apollo: Landing Optical Circuit Switching at Datacenter Scale," ArXiv, abs/2208.10041 (2022), hereinafter cited as "URATA 2022".

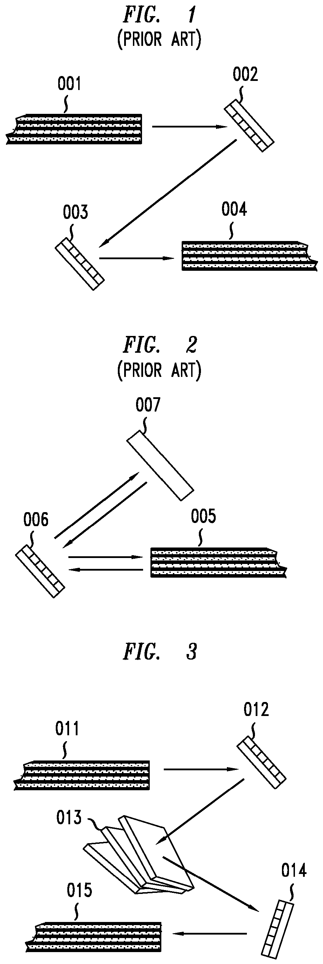

FIG. 1 is a schematic diagram of a first optical arrangement described in RYF 2001. In the arrangement of FIG. 1, light beams from a lensed input fiber array 001 are steered by MEMS mirror arrays 002 and 003 onto an output lensed fiber array 004. FIG. 2 is a schematic diagram of a second optical arrangement also described in RYF 2001. In the arrangement of FIG. 2, lensed fiber array 005 carries both the input and output optical signals. The optical output from fiber array 005 impinges MEMS mirror array 006 and is reflected from there onto retroreflective folding mirror 007. The retroreflected beam from mirror 007 returns to MEMS mirror array 006 and is reflected from there back into fiber array 005. A first portion of the MEMS mirrors of array 006 are committed to input optical fiber ports, and another portion are committed to output optical fiber ports. Thus, a single MEMS mirror array 006 and a single lensed fiber array 005 are able to implement the optical cross-connect. RYF 2001 reported successful operation of a 1296-port MEMS transparent optical cross-connect using the optical arrangement of FIG. 2.

FIG. 3, by contrast, schematically shows an optical arrangement within an example OCS module that would be useful for practicing the new approach described here. In the arrangement of FIG. 3, light beams from input fiber array 011 are steered by MEMS mirror array 012 onto an optical reflector of intermediate optical reflector array 013. After reflection from optical reflector array 013, the input light beams impinge MEMS mirror array 014 and are reflected from there onto output fiber array 015. Importantly, and unlike the prior art as represented, e.g., by RYF 2001, intermediate optical reflector array 013 includes fixed or variable mirror or other reflector elements that can relay the impinging optical beams to optical elements in other OCS modules.

For the intermediate optical reflector array, one possible alternative to mirrors is afforded by a Liquid Crystal On Silicon (LOCOS) array. With a LOCOS array, special holograms could be used to control the directional distribution of optical power. Typical LOCOS arrays have relatively small angular excursions, but the effective angular range could be extended, using imaging optics. Reducing the pixel pitch of the LOCOS arrays could also increase the angular excursion.

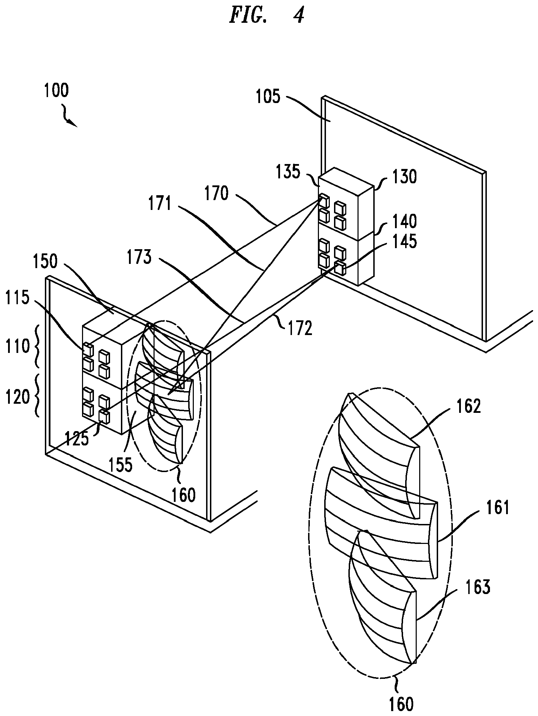

FIG. 4 is a schematic, perspective view of a single example OCS module 100 of a kind that could be useful in implementing the approaches described here. As shown in the figure, the module includes various components mounted on a case or chassis frame 105. Typically, case 105 will be conformed for insertion and engagement in a slot of a rack (not shown) having an array of multiple slots for receiving and engaging a multiplicity of modules similar to module 100. Atypical length of the OCS module 100 could be, e.g., on the order of tens of centimeters as measured from the front wall, i.e., the wall shown in the figure as supporting the input and output optical fiber ports, to the rear wall, i.e., the wall shown in the figure as supporting the steering matrices. As those skilled in the art will recognize, the module may need, in total size, to accommodate non-optical constraints such as mechanical and heating requirements.

With further reference to the figure, it will be seen that the OCS module 100 includes an array 110 of input optical fiber ports 115, an array 120 of output optical fiber ports 125, an input steering matrix 130 of beam steering elements 135, and an output steering matrix 140 of beam steering elements 145. The OCS module further includes imaging optics 150, 155, for conditioning input and output beams, respectively.

Although the embodiment of FIG. 4 and subsequent figures includes both an input steering matrix 130 and an output steering matrix 140, it should be understood that this is only an example. In other embodiments, matrices 130 and 140 may be replaced, without departing from the scope of the principles described here, by a single steering matrix having, e.g., different portions that serve, respectively, for the input and output steering functions. Accordingly, references made in the following discussion to input and output steering arrays should be understood as including, respectively, input and output subarrays of a single steering array.

The imaging optics are the optical components required for the optical signal to be properly routed and aligned to the steering optical reflectors and to and from the input and output optical fiber ports. Typical examples of imaging optics include, without limitation, collimator lens arrays, double telecentric lenses, polarization diversity elements, and Fourier lenses.

The OCS module further includes an array 160 of intermediate optical reflectors, best seen in the inset to the figure.

In the non-limiting example shown in FIG. 4, array 160 consists of optical reflector 161, which is configured at a suitable incidence angle for directing light between input and output steering arrays within its home OCS module 100, and optical reflectors 162 and 163, which are each configured at a suitable incidence angle for directing light between a steering array of home OCS module 100 and a steering array of a respective other OCS module (not shown in the figure).

In some example embodiments, the input 135 and output 140 steering matrices may be implemented as arrays of MEMS mirrors. In other example embodiments, they may be implemented as arrays of LCOS pixels.

In embodiments, the intermediate optical reflectors of array 160 may be fixed reflectors such as mirrors oriented at suitable incidence angles for coupling light beams incident from the local input steering matrix 130 to the output steering matrices or other elements of the home OCS module or of respective destination OCS modules. In other embodiments, the intermediate optical reflectors of array 160 may be, e.g., MEMS mirrors, having variable incidence angles. In some embodiments, the same steering intermediate optical reflector could support either intramodular or intermodular connections, depending on how its incidence angle has been set.

It is noteworthy in this regard that to facilitate intermodular coupling, it may be necessary for the optical reflector elements of the steering arrays to have relatively large angular ranges, so that they can reach fully into the intermediate optical reflector region. However, a reconfigurable, rather than a fixed, intermediate optical reflector can potentially relax this requirement. That is, a suitably oriented intermediate optical reflector could reflect an incoming beam to a destination OCS module even when the beam impinges the same spot on the intermediate optical reflector that is used for making intramodular connections.

The OCS module of FIG. 4 may be a fully functional optical circuit switch in which any optical input thereof can be connected to any optical output thereof. However, it also has the additional feature of being extendable. That is, the intermediate optical reflector array can steer beams to MEMS mirror arrays or other optical elements that are located in OCS module(s) other than the home OCS module.

It is noteworthy in this regard that input and output optical fiber ports are not necessarily limited to one fiber each. Various types of space multiplexing can be used as known in the art, including the use of multicore fibers. The OCS modules described here would more typically be used in space-division multiplexing, where all wavelengths belonging to a core would be switched together. using the two dimensions of the steering matrix for space switching. However, it is also noteworthy that in embodiments, the imaging optics subcomponent of the OCS module could be used for wavelength demultiplexing. That is, it could be used to separate the different wavelengths present in a core, so that wavelength channels can be switched independently. Such an approach would leave one dimension of the steering matrix for space switching, while using the other for wavelength switching. Alternatively, an additional steering layer could be used for wavelength switching.

In the example of FIG. 4, a light beam 170 incident from an input optical fiber port 115 of input array 110 impinges a steering element 135 of input steering matrix 130 and is reflected from there as light beam 171. Light beam 171 impinges reflector 161 of intermediate optical reflector array 160 and is reflected from there as light beam 172. Light beam 172 impinges a steering element 145 of output steering matrix 140 and is reflected from there as light beam 173. Light beam 173 impinges an output optical fiber port 125 of output array 120, from which it can, for example, be extracted into an optical fiber cable (not shown). It is noteworthy that in the example of FIG. 4, light beams 170-173 propagate in free space.

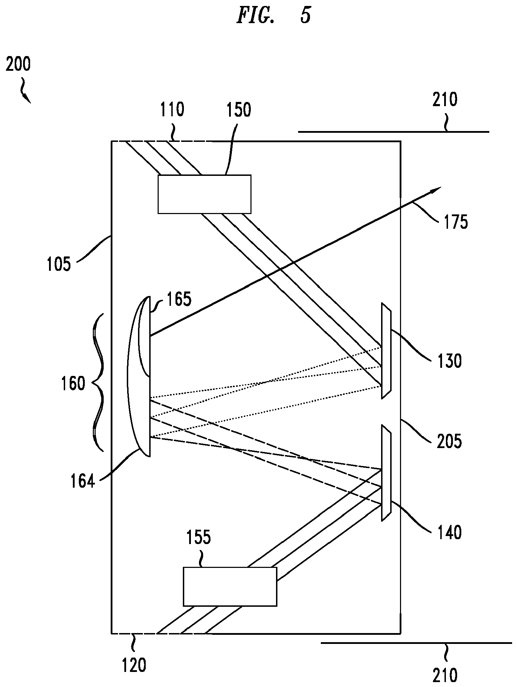

FIG. 5 provides another schematic view of an OCS module 200 similar to OCS module 100 of FIG. 4. FIG. 5 shows the OCS module 200 in cross section. Solely to simplify the presentation of FIG. 5, which is intended for pedagogical purposes only, input array 110 is shown as positioned at the top side of the figure, and output array 120 is shown as positioned at the bottom side of the figure. Some elements common to FIGS. 4 and 5 are designated by like reference numerals.

As represented in FIG. 5, intermediate optical reflector array 160 comprises optical reflector 164 for coupling the local input steering matrix 130 to the local output steering matrix 140, and optical reflector 165 for coupling the local input or output steering matrix to an element of a different OCS module, for intermodular coupling. By way of illustration, the figure shows light beam 175 reflecting from optical reflector 165 and exiting from module 200 through intermodular gate 205. Gate 205 is a free-space optical port in case 105 that allows a propagation path from module 200 to other destination modules. In embodiments, case 105 can be configured so that gate 205 is normally closed, but opens when module 200 is connected by, e.g., plugging it into a slot in a rack. In some embodiments, case 105 could be provided with open sides or an open top or bottom to allow free-space optical access. It should be noted in this regard that intermodular connections may be established between modules that share the same vertical level on a rack and/or between modules that occupy different vertical levels on the rack.

In example embodiments, the intermodular propagation is free-space propagation. In embodiments, the intermodular free-space propagation could be limited to propagation between adjacent OCS modules. In other embodiments, however, free-space propagation could be permitted from source modules to non-adjacent destination modules. Direct forwarding from the source module to the destination module would be beneficial, because it would be immune to failures of elements along the propagation path that would otherwise be used to relay the beam to its destination. For certain system sizes, however, it could still be advantageous to use intermediate relay elements. In some cases, intermodular propagation may take place wholly or partly within waveguiding media such as optical fibers or planar waveguides.

Imaging optics 150, 155 will typically include lenses for collimation or focusing. Although optics 150 and 155 are shown in the figure as separate elements, it should be noted that optical designs are feasible in which at least some subcomponents of the imaging optics can be shared between the input and output light beams.

With further reference to FIG. 5, it will be seen that OCS module 200 is aligned between guide rails 210 of the OXC node holding OCS modules 100 and 200, which may, e.g., be fabricated as part of a rack into which OCS module 200 is inserted. Particularly when intermodular propagation is over free space, it is important to have proper alignment between modules. Precision rail systems can be useful for this purpose. Additionally, there are known auto-calibration mechanisms that can be implemented to enhance the alignment for intermodular routing. In examples of auto-calibration, light is inserted, port-by-port, and the output power is measured while performing small-angle adjustments of the reflective elements to maximize output power. MEMS mirrors, for example, may be adjusted by varying voltages that control their orientations.

It will be understood from the above discussion that the optical reflectors for optical steering in an OCS module as described here should have enough angular range to impinge those portions of intermediate array 160 that direct the reflected light beam to optical fiber ports located in other OCS modules. This intermodular coupling makes it possible to increase the port count of the optical switch by adding more OCS modules to the same OXC node, and it makes it possible to do so without affecting existing light paths. Two-dimensional MEMS mirror arrays, for example, can offer an angular range above ±6°, and further magnification optics can be used to extend the angular reach, if needed. The utilization of an active intermediate optical reflector can substantially reduce the angular reach needed from the input/output steering optical reflectors, since the same intermediate optical reflector spot can be reconfigured to be used for intramodular and intermodular links.

One of the design constraints on an example OCS module of the kind described here is that there should typically be enough space for an intermediate optical reflector array that includes optical reflectors for intermodular coupling. Another constraint is that the steering optical reflectors have enough tilt-angle capacity to reach the portions of the intermediate optical reflector array that effectuate the intermodular coupling. Yet another constraint is that there typically be optical propagation paths between interconnected OCS modules. As mentioned above, these paths can be paths in free space or, alternatively, they can be achieved with optical waveguiding media such as optical fiber or planar waveguides. We believe that all of these constraints can feasibly be met using current capabilities in optical system design.

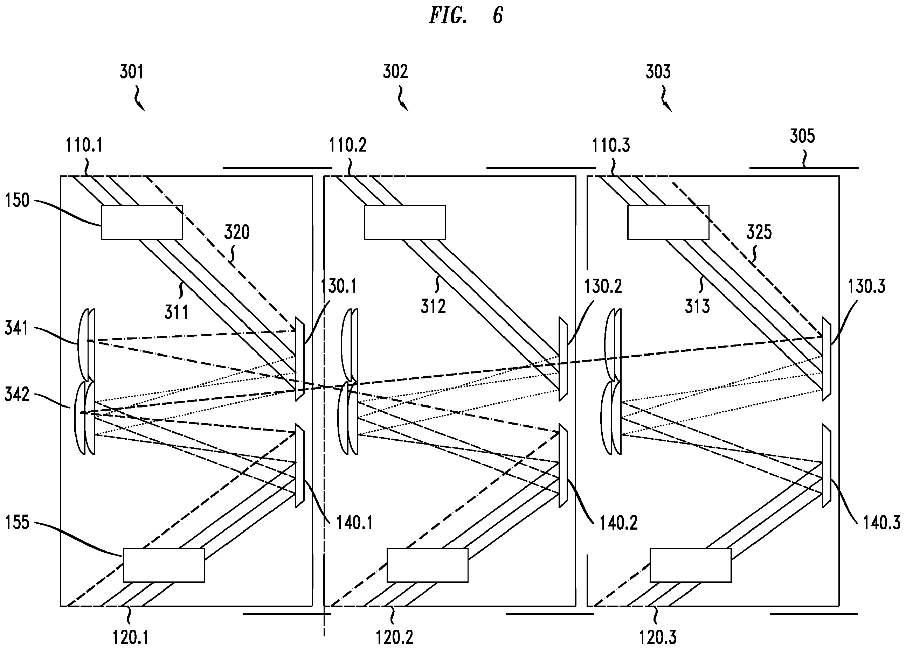

FIG. 6 provides a schematic, cross-sectional view of an ensemble of three OCS modules 301, 302, 303 mounted in a rack of the same OXC node with guard rails 305 and interconnected by intermodular optical propagation paths. Elements common to FIGS. 5 and 6 are designated by like reference numerals, except that the reference numerals of repeated elements are appended with ".1", ".2", or ".3" to designate the corresponding OCS module. Within each of the OCS modules, a cluster 311, 312, 313 of light beams is shown directed from respective input optical fiber ports of an input optical fiber port array 110.1, 110.2, 110.3 to respective, selected output optical fiber ports of an output array 120.1, 120.2, 120.3 within the same module.

Two light beams 320, 325 are also shown to illustrate the potential for intermodular coupling. In a first example, light beam 320 enters OCS module 301 through one of its input optical fiber ports of input array 110.1, reflects from the input steering matrix 130.1 of the same OCS module 301, and impinges optical reflector 341 of the intermediate optical reflector array of the same OCS module 301. Due to the particular orientation of optical reflector 341, light beam 320, after reflecting from optical reflector 341, exits module 301 and enters module 302 through respective intermodular gates. Within OCS module 302, light beam 320 impinges output steering matrix 140.2 of OCS module 302 and is reflected from there to a selected output optical fiber port of output array 120.2.

In a second example, light beam 325 enters OCS module 303 through one of its input optical fiber ports of input array 110.3 and impinges the input steering matrix 130.3 of the same OCS module 303. Due to the particular configuration of steering matrix 130.3, light beam 325, upon reflection from the steering matrix, bypasses the intermediate optical reflector array of OCS module 303, exits OCS module 303 and enters OCS module 302 through respective gates thereof. Light beam 325 passes through OCS module 302 and exits OCS module 302 to enter OCS module 301 through respective gates of these OCS modules 302, 301. Within module 301, light beam 325 impinges on optical reflector 342 of the intermediate optical reflector array therein. Due to the particular orientation of optical reflector 342, light beam 325, after reflecting from optical reflector 342, impinges on output steering matrix 140.1 of the same OCS module 301 and is reflected from there to a selected output optical fiber port of output array 120.1. A feature of light beam 325 is that to connect OCS module 303, which is the first OCS module in the propagation path, to OCS module 301, which is the last module in the propagation path, the input steering matrix 130.3 of the first OCS module 303 reflects the incoming light beam into an intermediate optical reflector of the last OCS module 301.

The example of light beams 320 and 325 is provided to illustrate the more general point that with suitable arrangements of the intermediate optical reflectors, any input optical fiber port in an ensemble of several OCS modules could, in principle, connect to any output optical fiber port in the same ensemble.

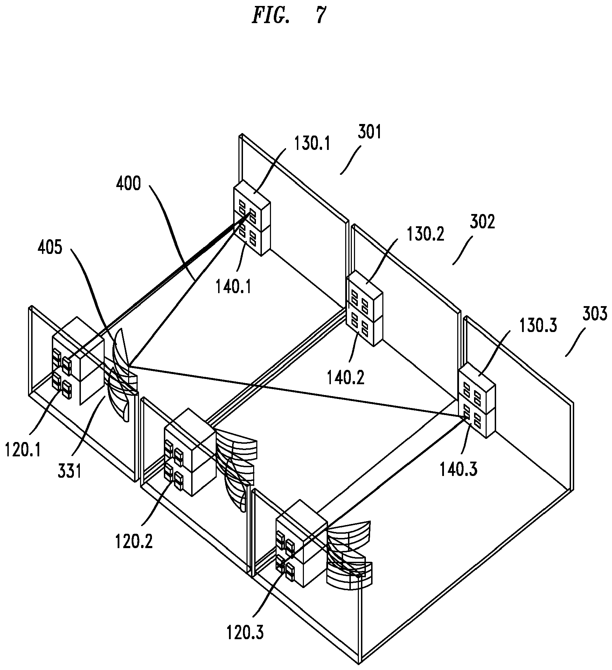

On inspection of FIG. 6, it will be understood that in order to bypass intermediate optical reflectors of intervening OCS module(s) on the same rack of an OXC node, the propagation paths of light beams 320 and 325 must pass in front of, or behind, the bypassed intermediate optical reflectors. In this context, the terms "in front of" and "behind" are with reference solely to the view of the modules as represented in the figure. FIG. 7, to which reference will next be made, has a depth dimension that provides a more complete view of an example propagation path.

FIG. 7 is a schematic, perspective view of an ensemble of three OCS modules, similar to the OCS module ensemble of FIG. 6. Figure elements common to FIGS. 6 and 7 are designated with like reference numerals. For simplicity of presentation, only three intermediate optical reflectors are shown in the intermediate optical reflector array of each module.

In FIG. 7, a light beam 400 is shown entering OCS module 301 and reflecting from input steering matrix 130.1 onto optical reflector 405 of intermediate optical reflector array 331 of the same OCS module 301. Upon reflection from optical reflector 405, light beam 400 passes through OCS module 302 without reflection, and impinges output steering matrix 140.3 of OCS module 303. Output steering matrix 140.3 directs light beam 400 to an output optical fiber port of output array 120.3.

As briefly noted above, embodiments can be designed with fixed passive intermodular routing, in which each OCS module has an intermediate optical reflector array with reflective elements dedicated to interconnect to output steering matrices of respective OCS modules. Alternative embodiments can be designed with active intermodular routing, in which the tilt angles of intermediate optical reflectors can be adjusted to reach desired destination OCS modules.

As also noted above, input and output steering matrices, as well as intermediate optical reflectors, can be implemented in various technologies, including MEMS and LCOS. MEMS mirrors for optical switching have been reported in the technical literature. As reported, for example, in J. I. Dadap et al., "Modular MEMS-based optical cross-connect with large port-count," in IEEE Photonics Technology Letters, vol. 15, no. 12, (Dec. 2003) 1773-1775, cited hereinafter as "DADAP 2003", an example MEMS mirror is an electrostatically actuated, double-gimbaled tilting mirror of gold-plated single-crystal silicon, suspended by torsional springs. Closed loop servo control may be provided, e.g., by a digital signal processor (DSP) with ADC and DAC interfaces. Reference in this regard may also usefully be made to R. Ryf et al., "1296-port MEMS transparent optical cross-connect with 2.07 petabit/s switch capacity," OFC 2001. Optical Fiber Communication Conference and Exhibit. Technical Digest Postconference Edition (IEEE Cat. 02CH37171), Anaheim, CA, USA, (2001) pages PD28-PD28, hereinafter cited as "RYF 2001". DADAP 2003 and RYF 2001 are hereby incorporated herein by reference in their respective entireties.

Suitable controller techniques are known. Nonlinear servo control techniques that may be useful in this regard are reported in, e.g., I. Brener et al., "Nonlinear servo control of MEMS mirrors and their performance in a large port-count optical switch," in OFC 2003, Atlanta, GA, Mar. 2003, pp. 385-386, the entirety of which is hereby incorporated herein by reference. Additional information on controller techniques that may be useful in this regard may be found in G. F. Franklin, J. D. Powell, and M. L.Workman, Digital Control of Dynamic Systems. Reading, MA: Addison-Wesley, 1998, particularly at pages 323-325, which are hereby incorporated herein by reference.

LCOS for optical switching has also been reported in the technical literature. Reference may usefully be made, for example, to N. K. Fontaine et al., "Few-Mode Fiber Wavelength Selective Switch with Spatial-Diversity and Reduced-Steering Angle," in Optical Fiber Communication Conference, OSA Technical Digest (online) (Optica Publishing Group, 2014), paper Th4A.7, the entirety of which is hereby incorporated herein by reference. For LCOS steering matrices or other types of reconfigurable steering matrix, it is noteworthy that the matrix transfer function of a hologram or grating type reflector can be adapted to decrease losses and crosstalk according to the angular reach required for the number of OCS modules that are in place. This may be significant, particularly because the tilt angle that is required increases with the number of OCS modules that are connected.

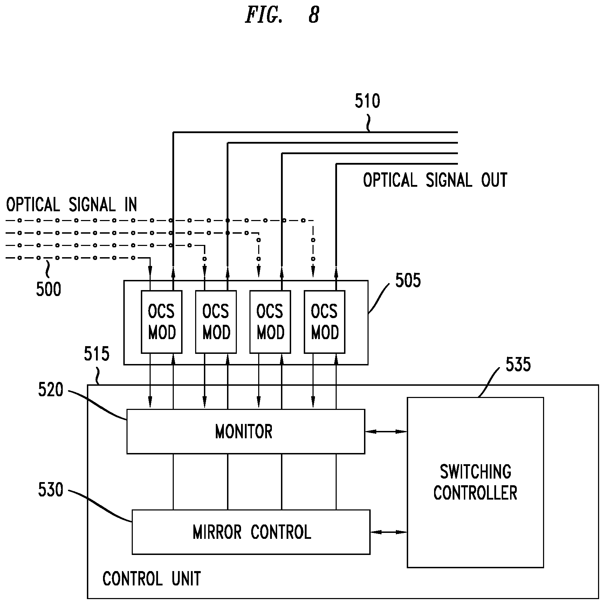

FIG. 8 is a notional block diagram illustrating functional elements of an optical switching system with OCS modules. FIG. 8 is presented solely for pedagogical purposes.

As illustrated in FIG. 8, fibers from a fiber optic cable 500 carrying an input optical signal plug into input optical fiber ports of an ensemble 505 of OCS modules. Fibers from a fiber optic cable 510 carrying an output optical signal plug into output optical fiber ports of OCS module ensemble 505. Control functions are implemented by control unit 515. The control functionality includes a module 520 for monitoring the calibration of the steering elements of the OCS modules of module ensemble 505, a module 530 for generating control signals and transmitting them to the steering elements, and a switching controller 535 for implementing servo control of the steering elements and for setting up prescribed intramodular and intermodular connections between input optical fiber ports and output optical fiber ports of the various OCS modules. The mirror switching controller 535 may also implement a training algorithm, using feedback from monitor module 530 and operating the steering elements through mirror switching control 535, to initialize and to recalibrate the various OCS modules of ensemble 505. The control functionality may be implemented by any suitably configured processing circuitry or combination of circuitry, such as a digital signal processor.

Precise optical reflector angle tuning can be used to correct residual position deviations through monitoring channels. By way of example, URATA 2022, cited above, describes the use of camera modules operating at an out-of-band wavelength to provide monitor signals.

Mirror switching controller 535 may also be operable to minimize the impact on already-established connections when a new optical path is being established.

In at least some embodiments, connecting additional modules to the system will leave the relative positions of the steering matrices and intermediate optical reflectors unchanged in OCS modules that were already in place. In such cases, additional training may be unnecessary for internal connectivity within the pre-existing OCS modules. However, training would generally be needed for intermodular connectivity with the newly inserted OCS modules of the ensemble 505. For example, the training could be used to identify the spots in an intermediate optical reflector, or to identify the configuration angles of a reconfigurable intermediate optical reflector, that optimize the signal quality of intermodular connections.

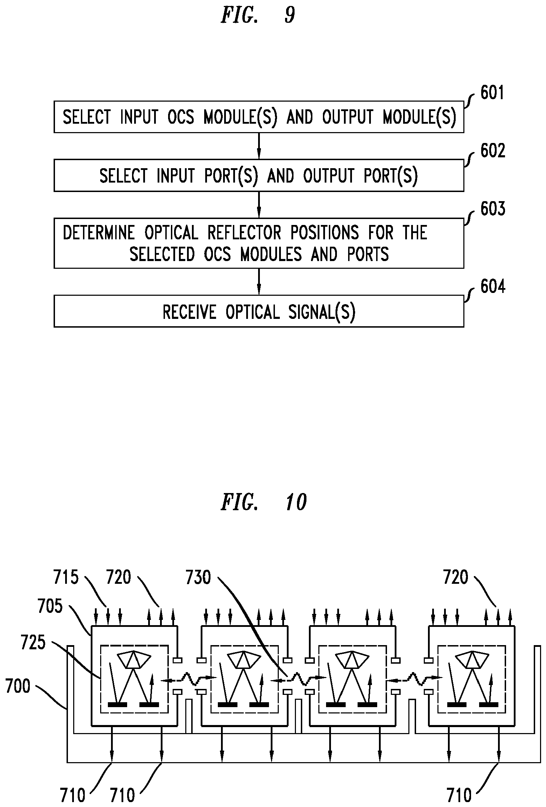

FIG. 9 is a flowchart illustrating the steps in an example procedure for operating an apparatus of the kind described here, e.g., the apparatus of any of FIGS. 3-8. It should be understood that FIG. 9 is meant to be illustrative only, and not as limiting as to any aspects of an operative procedure.

At block 601, input and output OCS module(s) are selected for each optical beam connection(s).

At block 602, input and output optical fiber ports of the OCS module(s), selected at block 601, are selected for each optical beam connection.

At block 603, steering optical reflector and intermediate optical reflector positions are determined for the respective connections. In embodiments, instead of making a fresh determination of the optical reflector positions, some or all of the desired optical reflector positions may be obtained by consulting a look-up table.

At block 604, respective optical signal(s) are received at the selected optical fiber port(s). If intermodular connections have been designated, this will result in one or more beams of light being transmitted from an intermediate optical reflector array of a source module to an element of a destination module, and ultimately to an output optical fiber port of the destination module. The intermodular transmission may, in example embodiments, include free-space transmission through free-space optical ports or gates between respective modules.

FIG. 10 is a schematic drawing of an electronic device 700 for optical switching, in which a plurality of switch modules 705 are removably mechanically fixed to electronic device 700 by a plurality of module connectors 710, which are shown symbolically in the figure. The module connectors 710 may effectuate a rigid mechanical attachment and an electrical connection. For example, the switch modules may be pluggable into the module connectors and unpluggable from them. The module connectors 710 may be arranged so that the switch modules can be organized in an array, such as a square or rectangular array having one or more rows and/or columns.

Each switch module 705 has a plurality 715 of input optical fiber ports and a plurality 720 of output optical fiber ports. Each switch module 705 also has a reconfigurable optical reflector array 725 that, as explained above, is capable of selectively making optical cross-connections between ones of the input optical fiber ports of its own switch module and ones of the output optical fiber ports of its own switch module. Each switch module 705 is also selectively reconfigurable to route light received from one of its own input optical fiber ports, via its own optical reflector array 725, to one or more others of the optical switch modules.

Free-space optical ports 730 in the switch modules 705 permit the routing of light between switch modules.

## Claims

1. An apparatus comprising:
an electronic device having a plurality of module connectors thereon; and
a plurality of optical circuit switch, OCS, modules, each OCS module being removably mechanically affixed to the electronic device by at least one of the module connectors and having a plurality of input optical fiber ports and a plurality of output optical fiber ports; wherein:
each one of the OCS modules has a reconfigurable arrangement of optical reflectors capable of selectively optically cross-connecting ones of the input optical fiber ports of the same one of the OCS modules to ones of the output optical fiber ports of the same one of the OCS modules; and
each particular one of the OCS modules is selectively configurable to route light received from ones of the optical input optical fiber ports thereof via the arrangement of optical reflectors thereof to one or more others of the OCS modules.

2. The apparatus of claim 1, wherein the routing of light from particular ones to others of the OCS modules is via one more free-space optical paths connecting the particular ones to the one or more others of the OCS modules.

3. The apparatus of claim 1, wherein at least one of the OCS modules is configurable to route light from ones of its own input optical fiber ports to a second one of the OCS modules via a free-space optical path traversing an intervening third one of the OCS modules.

4. The apparatus of claim 1, wherein the electronic device comprises an electronic controller communicatively connected to operate the reconfigurable arrangements of optical reflectors of the OCS modules.

5. The apparatus of claim 1, wherein, within each of the OCS modules, the reconfigurable arrangement of optical reflectors comprises an input optical reflector arranged to receive light from the input optical fiber ports, an output optical reflector arranged to transmit light to the output optical fiber ports, and an intermediate optical reflector array comprising an intermediate reflector that can reflectively couple the input optical reflector to the output optical reflector.

6. The apparatus of claim 5, wherein the input optical reflector is configurable to selectively direct light, via the intermediate optical reflector array, to one or more others of the OCS modules.

7. The apparatus of claim 6, wherein the intermediate optical reflector array comprises a configurable reflector that can be configured to act jointly with the input optical reflector for selectively directing light to one or more others of the OCS modules.

8. The apparatus of claim 1, wherein the electronic device comprises an electronic controller communicatively connected to operate the reconfigurable arrangements of optical reflectors of the OCS modules.

9. The apparatus of claim 1, wherein the reconfigurable arrangement of optical reflectors within each specific one of the OCS modules is configurable to direct light received from a different one of the OCS modules to one or more of the output optical fiber ports of the specific one of the OCS modules.

10. The apparatus of claim 1, wherein:
the reconfigurable arrangement of optical reflectors within each of the OCS modules comprises an input optical reflector arranged to receive light from the input optical fiber ports, an output optical reflector arranged to transmit light to the output optical fiber ports, and an intermediate optical reflector array comprising an intermediate reflector that can reflectively couple the input optical reflector to the output optical reflector;
the input optical reflector is a MEMS mirror array; and
the output optical reflector is a MEMS mirror array.

11. The apparatus of claim 1, wherein:
the reconfigurable arrangement of optical reflectors within each particular one of the OCS modules comprises an input optical reflector arranged to receive light from the input optical fiber ports, an output optical reflector arranged to transmit light to the output optical fiber ports, and an intermediate optical reflector array;
the intermediate optical reflector array comprises an intramodular intermediate reflector that can reflectively couple the input optical reflector of the particular one of the OCS modules to the output optical reflector of the particular one of the OCS modules; and
the intermediate optical reflector array further comprises at least one intermodular intermediate reflector that can reflectively couple the input optical reflector of the particular one of the OCS modules to a different one or different ones of the OCS modules.

12. A method, comprising:
causing an optical signal from a first input optical fiber port of a first optical circuit switch, OCS, module to be received by a second OCS module by reconfiguring at least one optical reflector of the first OCS module to reflect the optical signal onto an optical path terminating at the second OCS module;
causing the received optical signal to be output by the second OCS module by reconfiguring an optical reflector of the second OCS module to direct the received optical signal to an output optical fiber port of the second OCS module, thereby to make an intermodular connection; and
causing an optical signal from a second input optical fiber port of the first OCS module to be output by said first OCS module by reconfiguring at least one optical reflector of the first OCS module to direct the optical signal from said second input optical fiber port to an output optical fiber port of the first OCS module, thereby to make an intramodular connection.

13. The method of claim 12, wherein the optical path terminating at the second OCS module is a free-space optical path.

14. The method of claim 12, wherein:
the making of the intramodular connection comprises reconfiguring an input optical reflector and reconfiguring an output optical reflector of the first OCS module;
the making of the intermodular connection comprises reconfiguring an input optical reflector of the first OCS module and reconfiguring an output optical reflector of the second OCS module; and
within each said OCS module, the respective input and output optical reflectors are reflectively coupled via an intermediate optical reflector.

15. The method of claim 14, wherein the intramodular connection and the intermodular connection are made concurrently with a plurality of other intramodular and intermodular connections, and the making of the plural, concurrent connections comprises:
from a plurality of OCS modules including said first and second OCS modules, selecting an input OCS module and an output OCS module for implementing each connection from a set of desired connections;
selecting a respective input optical fiber port and a respective output optical fiber port of the selected OCS modules for implementing each desired connection;
obtaining a set of optical reflector configurations for implementing each desired connection; and
reconfiguring at least some of the input and output optical reflectors of the selected input and output OCS modules according to the obtained configurations to make the desired connections.
